# EUROPEAN PATENT SPECIFICATION

(11) **EP 1 472 478 B1**
(45) Date of publication and mention of the grant of the patent: **31.08.2005**
(21) Application number: 03706672.7
(22) Date of filing: 28.01.2003
(51) Int. Cl.: F16H 63/32

(54) **GEARBOX SELECTOR FORKS FOR AUTOMOTIVE GEARBOXES**
SCHALTGABELN FÜR FAHRZEUGGETRIEBE
FOURCHES D'EMBRAYAGE POUR BOITES DE VITESSES D'AUTOMOBILES

(30) Priority: 28.01.2002 GB 0201902
(43) Date of publication of application: 03.11.2004
(73) Proprietor: Volkswagen AG, 38436 Wolfsburg (DE)
(72) Inventor: CHILD, Anthony Joseph, Milton Keynes MK7 8QL (GB)
(86) International application number: PCT/GB2003/000356
(87) International publication number: WO 2003/064896

(56) References cited:
- US-B1- 6 318 206
- PATENT ABSTRACTS OF JAPAN vol. 013, no. 073 (P-830), 20 February 1989 (1989-02-20) & JP 63 257811 A (MAZDA MOTOR CORP), 25 October 1988 (1988-10-25)

## Description

The present invention relates to automotive gearboxes and is concerned with the gear selector forks of such gearboxes. Specifically, the invention relates to gear selector forks for an automotive gearbox of the type including an input shaft, an output shaft and optionally one or more further shafts, each shaft carrying at least one gearwheel, the gearwheels being associated in meshing pairs, at least some of the gearwheels being selectively rotationally lockable to and releasable from the associated shaft by means of a respective dog sleeve, which is movable axially with respect to the shaft by means of a gear selector fork which engages it in the axial direction, the gear selector fork being of generally U shape comprising two limbs connected by a bridge, the two limbs engaging the associated dog sleeve and the bridge including a clevis which is adapted to be engaged by a gear selector mechanism and is situated on the bridge closer to one arm than the other.

Such a gear selector fork can be seen in US-B-6318206.

Such gearboxes are well known. The pairs of gearwheels are in permanent mesh and typically one of them is permanently connected to the associated shaft while the other is selectively rotationally connectable to its shaft by a slotted dog sleeve which rotates with the shaft but is axially movable with respect to it by the gear selector mechanism to come into and out of engagement with a corresponding set of dogs on the gearwheel. Such gearboxes are nowadays generally of synchromesh type and for this purpose the dog sleeves typically incorporate cone clutches which ensure that the dog sleeves are rotating at the same speed as the associated gearwheels before they are brought into rotational engagement. Such gearboxes may have only an input shaft and an output shaft, in which case each shaft will carry a number of gearwheels at least equal to the number of output gear ratios which is required. Alternatively, such gearboxes may include a layshaft parallel to the input shaft, in which case the input shaft typically carries only a single gearwheel which meshes with a gearwheel on the layshaft, from which power is transmitted to the output shaft via a pair of meshing gearwheels selected in dependence on the gear ratio required.

The gear selector forks are generally mounted to pivot with respect to the gearbox but they may also be mounted to slide linearly with respect to it. The force necessary to move the gear selector forks to engage or disengage a desired gearwheel is applied to the associated dog sleeve by the gear selector mechanism via a clevis which for space or packing reasons is generally situated asymmetrically on the bridge of the selector fork, that is to say closer to one limb than the other. This necessarily means that the force of the gear selector mechanism is applied to the gear selector forks asymmetrically and thus that the axial force applied by the gear selector lever to the associated dog sleeve is asymmetrical also, that is to say greater on one side of the associated shaft than on the other side. This asymmetric force application exerts a moment or skewing force on the dog sleeve.

In smaller gearboxes, the force that need be applied to the dog sleeves and thus the skewing force are relatively small. The dog sleeves are a close sliding fit with the associated shaft over an appreciable axial distance and this is sufficient to counteract the skewing force and ensure that it does not result in any significant impairment of the operation of the gearbox. However, in larger gearboxes, the shafts and the dog sleeves have a greater diameter to accommodate the greater powers that are transmitted but the axial length of the dog sleeves is not significantly increased because this would result in an unacceptable increase in the overall length of the gearbox. The axial force that must be applied to the dog sleeves is considerably larger and the restraining force exerted by the sliding fit of the dog sleeves on the shafts is found not always to be sufficient to prevent twisting or skewing of the dog sleeves on the shafts. This prevents a smooth gearshift and can ultimately result in the dog sleeves becoming immovably locked onto the shafts and thus in failure of the gearbox.

It is the object of the invention to provide an automotive gearbox selector fork which will eliminate or substantially reduce the problem referred to above.

According to the present invention a gear selector fork for an automotive gearbox constitutes a first generally U-shaped member lying generally in a first plane and comprising two limbs connected by a bridge, the bridge affording a clevis for the application of an actuating force which is closer to one limb than to the other, each limb being adapted to engage a dog sleeve rotationally fixedly but axially movably carried on a shaft of the gearbox, characterised in that each limb constitutes one arm of a respective second generally U-shaped member lying generally in a second plane extending transverse to the first plane, the two second U-shaped members being so constructed that the stiffness of one second U-shaped member closest to the clevis to a force applied to one of its arms towards the other is less than that of the other second U-shaped member.

Thus the gear selector fork can be considered to comprise three generally U-shaped members, that is to say a first U-shaped member whose limbs are integral with and constitute at least part of one arm or limb of a respective one of two second generally U-shaped members, the first and second U-shaped members lying generally in planes which are transverse, e.g. perpendicular, to one another. In use, the free arms of the two second U-shaped members engage a dog sleeve of the gearbox. The stiffness of that second U-shaped member closest to the clevis is less than that which is furthest from the clevis.

In use, when the gear selector fork is moved by the gear selector mechanism in such a manner as to cause the free arms of the two second U-shaped members to move a dog sleeve of the gearbox, the asymmetrical positioning of the clevis results in the second U-shaped member closest to the clevis engaging the dog sleeve first and/or initially applying to the dog sleeve a greater force than the other second U-shaped member. However, the rigidity of the second U-shaped member closest to the clevis is less than that of the other second U-shaped member which means that it yields or bends to a greater extent than the other second U-shaped member. The construction of the limbs of the first U-shaped member as members which are themselves U-shaped permits substantial resilience to be imparted to the selector fork and also permits this resilience to be readily altered by minor structural alterations. Such resilience may be "tuned" to ensure that the forces applied by the two second U-shaped members to the dog sleeve are substantially equal. This will eliminate any risk of skewing or jamming of the dog sleeve on the associated shaft.

The differential stiffness or resilience of the two second U-shaped members may be achieved in a variety of manners. Thus one or both arms and/or the bridge of that second U-shaped member which is closest to the clevis may be provided with a smaller cross-section than that of the other second U-shaped member or it may be differently shaped or provided with a region of weakness.

How the differential stiffness is achieved is not of the essence of the invention but the construction of the gear selector fork in accordance with the invention makes this easy to achieve in a variety of ways and makes it easy to "tune" the gear selector fork to match the precise requirements of any particular gearbox.

In use, the gear selector fork may be accommodated within the gearbox so as to move linearly. Alternatively and preferably, it may be pivotally mounted with respect to the gearbox and in this event it is preferred that respective pivotal mountings are provided in the limbs of the first generally U-shaped member, either at their ends remote from the bridge or at positions intermediate their ends.

The present invention relates also to an automotive gearbox of the type referred to above in which one or more or all of the gear selector forks are of the type referred to above.

Further features and details of the invention will be apparent from the following description of one specific embodiment of gear selector fork in accordance with the invention which is described by way of example with reference to the single accompanying drawing which is a perspective view of the gear selector fork.

The gear selector fork comprises a generally U-shaped member comprising two limbs 2, 4 which are integrally connected by a bridge 6. Integral with one end of the bridge 6 adjacent one of the limbs 2 is a clevis 8 of conventional construction. The clevis 8 affords a recess 10 for engagement by an engagement member of a gear selector mechanism. Integral with the other end of the bridge above the other limb 4 is a conventional locking detent 12, the construction and purpose of which are well known. The cross-sectional area of the limb 4 is greater than that of the limb 2, for reasons which will be discussed below. The limbs 2, 4 and bridge 6 lie generally in a first plane. Each of the limbs 2, 4 constitutes one limb or arm of a respective further U-shaped member, each of which has a second arm 14 and lies generally in a respective second plane perpendicular to the first plane. Situated in the bridge of each second U-shaped member is a pivotal mounting constituted by a hole 16, the purpose of which will be described below. Situated in the free end of each arm 14 is a further hole 18, the purpose of which will also be described below.

The two second U-shaped members are so constructed, in this case by virtue of the increased cross-sectional area of the arm 4 as compared to the arm 2 and of the associated bridge interconnecting the arms 4 and 14 as compared to the bridge connecting the arms 2 and 14, that the stiffness of the U-shaped member 4, 14 to a force applied to the U-shaped member 4, 14 in the plane in which it lies is greater than that of the U-shaped member 2, 14.

In use, the gear selector fork is pivotally mounted within a gearbox by a shaft which is connected to the gear box casing and passes through the holes 16. Short pegs or stub shafts retained in the holes 18 are slideably received in an annular groove machined in the exterior of the dog sleeve of the associated gear wheel. The gear selector member engages the clevis 8. When the gear selector fork is moved by the selector mechanism, the force exerted on it is necessarily asymmetrical and a greater force is initially exerted on the dog sleeve by the U-shaped member 2, 14 than by the U-shaped member 4, 14. However, due to the resilience imparted by the U-shaped configuration, it yields and this results in an increase in the force exerted by the U-shaped member 4, 14. The difference in resilience of the two U-shaped members is adjusted or "tuned" such that the force exerted by the two U-shaped members is substantially the same and thus the skewing force exerted on the dog sleeve is minimised or reduced to substantially zero.

Numerous modifications may be effected to the embodiment described above. Thus the differential stiffness of the two second U-shaped members may be achieved in various ways and the pivotal mountings 16 may be provided in a variety of positions, e.g. at a position intermediate the ends of the limbs 2, 4, as indicated by the holes 16' shown in chain lines.

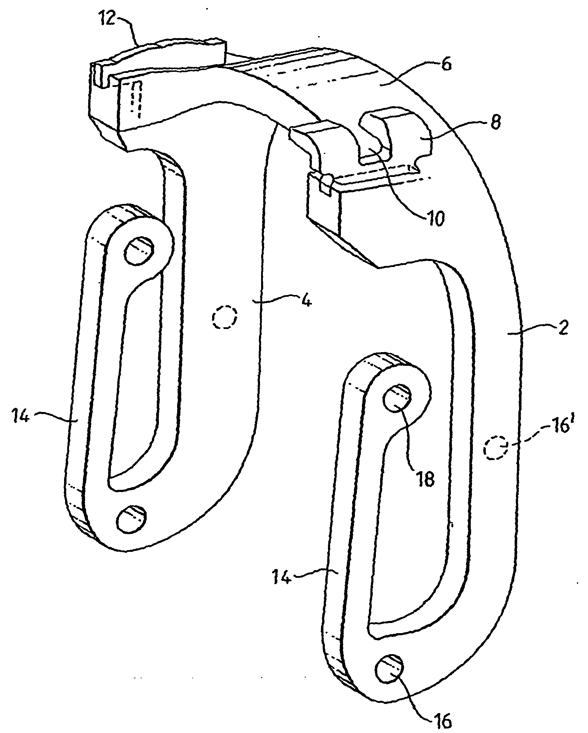

## Claims

1. A gear selector fork for an automotive gearbox which constitutes a first generally U-shaped member lying generally in a first plane and comprising two limbs (2, 4) connected by a bridge (6), the bridge affording a clevis (8) for the application of an actuating force which is closer to one limb than to the other, each limb being adapted to engage a dog sleeve rotationally fixedly but axially movably carried on a shaft of the gearbox, **characterised in that** each limb constitutes one arm of a respective second generally U-shaped member (2, 14 and 4, 14) lying generally in a second plane extending transverse to the first plane, the two second U-shaped members being so constructed that the stiffness of one second U-shaped member (2, 14) closest to the clevis to a force applied to one of its arms towards the other is less than that of the other second U-shaped member (4, 14).

2. A gear selector fork as claimed in Claim 1 in which the limb (2) forming part of the said one second U-shaped member has a smaller cross-sectional area than the limb (4) forming part of the said other second U-shaped member.

3. A gear selector fork as claimed in Claim 1 or 2 affording respective pivotal mountings (16) at the ends of the limbs remote from the bridge of the first generally U-shaped member.

4. A gear selector fork as claimed in Claim 1 or 2 affording respective pivotal mountings at positions intermediate the ends of the limbs of the first generally U-shaped member.

5. An automotive gearbox including an input shaft, an output shaft and optionally one or more further shafts, each shaft carrying at least one gearwheel, the gearwheels being associated in meshing pairs, at least some of the gearwheels being selectively rotationally lockable to and releasable from the associated shaft by means of a respective dog sleeve, which is movable axially with respect to the shaft by means of a gear selector fork which engages it in the axial direction, the gear selector fork being as claimed in any one of the preceding claims.

## Patentansprüche

1. Schaltgabel für ein Fahrzeuggetriebe, die ein erstes allgemein U-förmiges Element bildet, das allgemein in einer ersten Ebene liegt und zwei durch eine Brücke (6) verbundene Glieder (2, 4) umfasst, wobei die Brücke einen Gabelkopf (8) zum Anlegen einer Betätigungskraft aufweist, der sich näher an einem Glied als am anderen befindet, wobei jedes Glied zur Ineingriffnahme einer Klauenmuffe ausgeführt ist, die zwar drehfest, aber axial beweglich auf einer Welle des Getriebes getragen wird, **dadurch gekennzeichnet, dass** jedes Glied einen Arm eines jeweiligen zweiten allgemein U-förmigen Elements (2, 14 und 4, 14) bildet, das allgemein in einer zweiten Ebene liegt, die sich quer zur ersten Ebene erstreckt, wobei die beiden zweiten U-förmigen Elemente so ausgeführt sind, dass die Steifigkeit eines zweiten U-förmigen Elements (2, 14), das dem Gabelkopf am nächsten ist, gegenüber einer an einen seiner Arme angelegten Kraft bezüglich des anderen geringer ist als die des anderen zweiten U-förmigen Elements (4, 14).

2. Schaltgabel nach Anspruch 1, bei der das ein Teil des einen zweiten U-förmigen Elements bildende Glied (2) eine kleinere Querschnittsfläche aufweist als das einen Teil des anderen zweiten U-förmigen Elements bildende Glied (4).

3. Schaltgabel nach Anspruch 1 oder 2, die jeweilige Schwenklagerungen (16) an den Enden der Glieder von der Brücke des ersten allgemein U-förmigen Elements entfernt bereitstellt.

4. Schaltgabel nach Anspruch 1 oder 2, die jeweilige Schwenklagerungen an zwischen den Enden der Glieder des ersten allgemein U-förmigen Elements liegenden Positionen bereitstellt.

5. Fahrzeuggetriebe mit einer Eingangswelle, einer Ausgangswelle und wahlweise einer oder mehreren weiteren Wellen, wobei jede Welle mindestens ein Zahnrad trägt, wobei die Zahnräder in kämmenden Paaren zugeordnet sind und mindestens einige der Zahnräder mittels einer jeweiligen Klauenmuffe selektiv mit der zugehörigen Welle drehverriegelbar und von ihr lösbar sind, wobei die Klauenmuffe bezüglich der Welle mittels einer Schaltgabel, die sie in Axialrichtung in Eingriff nimmt, axial beweglich ist, wobei die Schaltgabel einem der vorhergehenden Ansprüche entspricht.

## Revendications

1. Fourchette de sélection de vitesses pour une boîte de vitesses automatique qui constitue un premier organe généralement en forme de U se trouvant généralement dans un premier plan et comprenant deux branches (2, 4) connectées par un pont (6), le pont présentant un étrier (8) pour l'application d'une force d'actionnement, qui est plus proche d'une branche que de l'autre, chaque branche étant prévue pour engager une douille à griffes portée de manière fixe en rotation mais mobile axialement sur un arbre de la boîte de vitesses, **caractérisée en ce que** chaque branche constitue un bras d'un deuxième organe respectif généralement en forme de U (2, 14 et 4, 14) se trouvant généralement dans un deuxième plan s'étendant transversalement au premier plan, les deux deuxièmes organes en forme de U étant construits de telle sorte que la rigidité d'un deuxième organe en forme de U (2, 14) le plus proche de l'étrier vis-à-vis d'une force appliquée sur l'un de ses bras en direction de l'autre, est inférieure à celle de l'autre deuxième organe en forme de U (4, 14).

2. Fourchette de sélection de vitesses selon la revendication 1, dans laquelle la branche (2) faisant partie dudit un deuxième organe en forme de U a une surface en section transversale inférieure à la branche (4) faisant partie dudit l'autre deuxième organe en forme de U.

3. Fourchette de sélection de vitesses selon la revendication 1 ou 2, possédant des fixations pivotantes respectives (16) aux extrémités des branches éloignées du pont du premier organe généralement en forme de U.

4. Fourchette de sélection de vitesses selon la revendication 1 ou 2, possédant des fixations pivotantes respectives en des positions entre les extrémités des branches du premier organe généralement en forme de U.

5. Boîte de vitesses pour automobile comportant un arbre d'entrée, un arbre de sortie et éventuellement un ou plusieurs arbres supplémentaires, chaque arbre portant au moins une roue d'engrenage, les roues d'engrenage étant associées en paires s'engrenant, au moins certaines des roues d'engrenage pouvant être verrouillées en rotation de manière sélective à l'arbre associé, et pouvant en être desserrées, au moyen d'une douille à griffes respective, qui peut se déplacer axialement par rapport à l'arbre au moyen d'une fourchette de sélection de vitesses qui vient en prise avec elle dans la direction axiale, la fourchette de sélection de vitesses étant telle que revendiquée dans l'une quelconque des revendications précédentes.
